# EUROPÄISCHE PATENTSCHRIFT

(11) **EP 3 409 514 B1**
(45) Veröffentlichungstag und Bekanntmachung des Hinweises auf die Patenterteilung: **01.04.2020**
(21) Anmeldenummer: 17173468.4
(22) Anmeldetag: 30.05.2017
(51) Int. Cl.: B60G 17/005, B60G 9/02, F16K 15/18, B60G 17/056

(54) **STEUEREINHEIT, ZYLINDERBAUGRUPPE, UND VORRICHTUNG ZUR ANSTEUERUNG EINER PENDELACHSE FÜR EINE MOBILE ARBEITSMASCHINE**
CONTROL UNIT, CYLINDER MODULE, AND DEVICE FOR CONTROLLING OF A PENDULUM AXLE FOR A MOBILE WORKING MACHINE
UNITÉ DE COMMANDE, ENSEMBLE CYLINDRE ET DISPOSITIF DE COMMANDE D'UN ESSIEU OSCILLANT POUR UNE MACHINE DE TRAVAIL MOBILE

(43) Veröffentlichungstag der Anmeldung: 05.12.2018
(73) Patentinhaber: Bucher Hydraulics Erding GmbH, 85435 Erding (DE)
(72) Erfinder: Wetzstein, Jonas, 81825 München (DE)
(74) Vertreter: Witte, Weller & Partner Patentanwälte mbB

(56) Entgegenhaltungen:
- EP-A1- 0 076 791
- DE-B- 1 264 963
- DE-U1- 29 517 287
- FR-A1- 2 034 303
- JP-A- 2000 238 999

## Beschreibung

Die vorliegende Offenbarung betrifft eine Steuereinheit für einen Zylinder einer Pendelachse einer mobilen Arbeitsmaschine. Ferner betrifft die vorliegende Offenbarung eine Zylinderbaugruppe für eine Pendelachse einer mobilen Arbeitsmaschine, die mit einer derartigen Steuereinheit sowie mit einem Zylinder versehen ist. Daneben betrifft die vorliegende Offenbarung eine Vorrichtung zur Ansteuerung einer Pendelachse, die zwei derartig gestaltete Zylinderbaugruppen aufweist, sowie eine Pendelachsbaugruppe für eine mobile Arbeitsmaschine und eine mobile Arbeitsmaschine, die mit einer entsprechend gestalteten Pendelachsbaugruppe versehen ist.

Insbesondere bezieht sich die vorliegende Offenbarung auf das Gebiet der hydraulisch steuerbaren Pendelachsen für mobile Arbeitsmaschinen. In diesem Zusammenhang wird beispielhaft auf die EP 1 449 686 A2 verwiesen, die eine Fahreinheit für Fahrzeuge, insbesondere für Mobilbagger, offenbart, die mit einem Fahrgestell versehen ist, an welchem wenigstens eine Pendelachse gelenkig aufgenommen ist, wobei an dem Fahrgestell wenigstens ein Hydraulikzylinder mit verfahrbarer Kolbenstange vorgesehen ist, mit deren Kolbenstangenende eine Kraft auf eine ebene Auflagefläche der Pendelachse ausübbar ist, um die Pendelachse in einer gewünschten Lage zu stützen. Vorzugsweise sind zwei derartige Hydraulikzylinder an einander abgewandten Enden der Pendelachse aufgenommen, um diese selektiv zu verriegeln bzw. zu blockieren.

Aus der FR 2 034 303 A1 ist eine Blockiervorrichtung für eine Pendelachsbaugruppe bekannt, mit einem hydraulischen Steuerventil, das über eine einzige Leitung versorgt wird und über zwei Ausgänge mit zwei Zylindern der Pendelachsbaugruppe verbunden ist, wobei das Ventil dazu ausgebildet ist, eine Verbindung zwischen der Versorgungsleitung und den Zylindern zu sperren oder freizugeben, wobei das Ventil eine Zuflusskammer aufweist, die in einen Kanal mündet, und wobei zwischen dem Kanal und den beiden Ausgängen für die Zylinder der Pendelachsen in Abhängigkeit von einer Schaltstellung des Steuerventils jeweils eine Absperrung der Ausgänge ermöglicht ist.

Aus der EP 0 076 791 A1 ist eine Einrichtung zum Blockieren der Pendelbewegung einer Pendelachse eines Radfahrzeuges mit einem einen Ausleger tragenden Schwenkwerk bekannt, mit an der Achse angreifenden Zylinder-Kolbenaggregaten, deren Arbeitsräume über zu denselben öffnende Rückschlagventile miteinander in Verbindung bringbar sind, wobei die Rückschlagventile durch eine Druckmittelquelle aufsteuerbar sind, und wobei die Druckmittelquelle durch ein vom Schwenkwerk des Fahrzeuges betätigbares Steuerventil mit den Rückschlagventilen in Verbindung bringbar ist.

Aus der JP 2000-238999 A ist eine Pendelachse für eine Hinterachse eines Fahrzeugs bekannt, wobei die Pendelachse zwei Zylinder aufweist, die jeweils einem Rad zugeordnet sind, wobei zum Sperren oder zur Freigabe einer Pendelbewegung der Pendelachse jedem Zylinder eine Steuerventileinheit zugeordnet ist, und wobei die beiden Steuerventileinheiten über eine gemeinsame Versorgungsleitung mit einer Druckmittelversorgungseinheit verbunden sind.

Die DE 1 264 963 B beschreibt eine Einrichtung zur hydraulischen Ansteuerung der Zylinder einer Pendelachsbaugruppe. Zu diesem Zweck ist ein Steuerorgan vorgesehen, welches pneumatisch betätigt werden kann. Aus der DE 295 17 287 U1 ist eine Pendelachsanordnung für Nutzfahrzeuge, insbesondere Radlader oder Schwenklader, bekannt, wobei die Pendelachsanordnung eine in Abhängigkeit von einem Schwenkwinkel einer Arbeitseinrichtung des Nutzfahrzeugs automatisch schaltbare Pendelachsabstützung mit zwei Stützzylindern aufweist, wobei jedem Stützzylinder ein Leitungsbruchsicherungsventil in Form eines Rückschlagventil zugeordnet ist, und wobei die Leitungsbruchsicherungsventile durch eine Schaltventilanordnung in Abhängigkeit vom Schwenkwinkel der Arbeitseinrichtung gesperrt oder geöffnet werden.

Die vorliegende Offenbarung bezieht sich auf solche Arten von Pendelachsbaugruppen, die hydraulisch mit einer Bordhydraulik der Arbeitsmaschine direkt oder mittelbar verbunden sind. Demgemäß können die Zylinder der Pendelachsbaugruppe über die Bordhydraulik gespeist und vorgespannt werden. Die Pendelachsbaugruppen können auch mit einer Fahrzeughydraulik gekoppelt sein, die einem Fahrantrieb zugeordnet ist. Ferner ist der Pendelachsbaugruppe üblicherweise ein Steuerventil zugeordnet, über welches eine aktuelle Betriebsart (Pendelmodus oder Sperrmodus) der Pendelachse einstellbar ist.

Mobile Arbeitsmaschinen können etwa Baumaschinen, landwirtschaftliche sowie forstwirtschaftliche Nutzfahrzeuge umfassen. Beispielhaft kann es sich um Radlader, Bagger, Traktoren, allgemein um Zugfahrzeuge sowie um Anhänger handeln. Mobile Arbeitsmaschinen können grundsätzlich mit einem eigenen Fahrantrieb versehen sein. Es sind auch Ausgestaltungen mobiler Arbeitsmaschinen denkbar, die keinen eigenen Fahrantrieb aufweisen.

Pendelachsen erlauben eine deutliche Verschränkung zwischen einem Achskörper sowie einem Fahrgestell der mobilen Arbeitsmaschine. Auf diese Weise ist eine gute Geländegängigkeit bzw. Manövrierbarkeit gewährleistet. Ferner wird der Einsatz der mobilen Arbeitsmaschine auf weichem Untergrund, wie etwa auf schlammigem oder sandigem Untergrund, vereinfacht. Im Sinne dieser Offenbarung kann unter einem Fahrgestell allgemein ein rahmenartiges Gestell verstanden werden, das einen Aufbau trägt. Ein Fahrgestell kann jedoch auch Teil eines selbsttragenden Aufbaus sein.

Es sind jedoch Anwendungsfälle bekannt, bei denen es gewünscht ist, zumindest eine oder sämtliche Pendelachsen der mobilen Arbeitsmaschine zu blockieren, so dass kein Pendeln oder Verschwenken des Achskörpers relativ zum Fahrgestell ermöglicht ist. Dies kann auch eine zumindest deutlich spürbare Einschränkung der Verschwenkbarkeit bzw. eines Verschwenkwinkels beinhalten. Eine Hauptfunktion blockierbarer Pendelachsen besteht darin, im blockierten Zustand beim Arbeiten der Arbeitsmaschine bzw. beim Transport von Lasten eine Abstützung über die Räder zu gewährleisten. Ferner kann beim Fahren auf öffentlichen Straßen bzw. allgemein auf festem, ebenem Untergrund ein Blockieren der Pendelachsen erwünscht sein.

Im Sinne dieser Offenbarung bezieht sich der Begriff "Blockieren" nicht auf ein Abbremsen oder Sperren von Rädern der Pendelachse. Vielmehr geht es um ein Blockieren oder Verriegeln einer Schwenkbewegung der Pendelachse relativ zum Fahrgestell.

Mit anderen Worten kann die Pendelachse bzw. kann deren Achskörper hydraulisch blockiert werden. Häufig weisen mobile Arbeitsmaschinen, etwa Mobilbagger, Radlader, Traktoren oder dergleichen, eine integrierte Bordhydraulik auf, die auch einen Druckerzeuger umfassen kann. Es können diverse Kreisläufe bzw. Pfade vorgesehen sein, um verschiedene Funktionen der mobilen Arbeitsmaschine bereitzustellen. Dies kann einen Fahrantrieb der Arbeitsmaschine sowie Zusatzfunktionen betreffen, etwa Hebefunktionen, Schwenkfunktionen, Zugfunktionen, Hilfsantriebe, Zapfwellenantriebe oder dergleichen.

Achskörper der Pendelachsen sind üblicherweise beabstandet von Zentralelementen der Bordhydraulik angeordnet. Dies bedingt einen gewissen Aufwand für die Implementierung und insbesondere die Ankopplung bzw. Ansteuerung der Verriegelungsvorrichtungen oder Blockiervorrichtungen für diese Pendelachsen. Ferner sind gerade die Achskörper der Pendelachsen mobiler Arbeitsmaschinen häufig direkt den Umgebungsbedingungen ausgesetzt. Die Achskörper neigen zu Verschmutzungen und Anhaftungen. Dies kann auch das hydraulische System zur Steuerung der Verriegelung bzw. des Blockierens betreffen.

Es sind verschiedene Konzepte für die hydraulische Ansteuerung von Pendelachsbaugruppen bekannt.

Ein erstes Konzept umfasst die Ansteuerung der Zylinder der Pendelachsbaugruppe über zwei Leitungen, wobei eine Leitung als Steuerleitung und eine andere Leitung als Versorgungsleitung gestaltet ist. Über die Steuerleitung kann beispielhaft ein dem jeweiligen Zylinder zugeordnetes Ventil angesteuert werden, um den Zylinder bedarfsweise zu sperren. Die Ansteuerung über zwei Leitungen, also über eine Steuerleitung und eine Versorgungsleitung, bedingt einen Mehraufwand bei der Herstellung und Montage. Dies betrifft einerseits die reine Verrohrung. Hierbei muss ferner beachtet werden, dass verschiedene Arbeitsmaschinen, insbesondere Mobilbagger und dergleichen, ein Drehgelenk zwischen den Zylindern der Pendelachsbaugruppe und der Hydraulikversorgung (Bordhydraulik) aufweisen. Demgemäß erhöht sich auch der Aufwand für die Drehdurchführung für die beiden Rohrleitungen. Schlussendlich erhöht jede weitere Leitung auch das Leckagerisiko.

Ein anderes Konzept der Ansteuerung der Zylinder der Pendelachsbaugruppe umfasst lediglich eine Leitung, die als kombinierte Steuer- und Versorgungsleitung gestaltet ist. Je nach Höhe des in dieser Leitung anliegenden Drucks können den Zylindern der Pendelachsbaugruppe zugeordnete Ventile geöffnet oder gesperrt werden. Diese Leitung dient jedoch auch als Versorgungsleitung, um ein Fluid (Druckmittel in Form von Steueröl oder Füllöl) in die Zylinder der Pendelachsbaugruppe einzubringen. Die Versorgung mit Steueröl im Pendelbetrieb dient auch dazu, Volumenunterschiede zwischen der verdrängten Ölmenge des einen und der aufnehmbaren Ölmenge des anderen Zylinders auszugleichen.

Bei der Variante mit lediglich einer Leitung muss beachtet werden, dass Druckschwankungen, die etwa über maschinenseitige Lastwechsel und dgl. entstehen können, die Funktion beeinflussen können. Die Ansteuerung der Pendelachsbaugruppe muss einerseits feinfühlig sein, um über lediglich eine Leitung sowohl die Druckmittelversorgung als auch die Ansteuerung gewährleisten zu können. Ferner muss das System robust ausgelegt werden, um interne Druckschwankungen kompensieren zu können. Dies kann Druckschwankungen im Anschluss bzw. Druckspitzen beim Öffnen des Ventils betreffen.

Zylinder für Pendelachsbaugruppen sind sicherheitsrelevante Bauteile, da sie zumindest im Sperrmodus für die Stabilität der mobilen Arbeitsmaschine verantwortlich sind. Im Falle eines Versagens eines der Zylinder der Pendelachsbaugruppe droht schlimmstenfalls sogar ein Umkippen der Arbeitsmaschine.

Insofern müssen auch Maßnahmen getroffen werden, um ein möglichst sicheres und vorhersagbares Verhalten der Pendelachse im Falle eines Leitungsbruchs zu gewährleisten. In diesem Fall sollen Instabilitäten der Arbeitsmaschine mit hoher Sicherheit vermieden werden können.

Auch bei ordnungsgemäßem Betrieb der Pendelachsbaugruppe ist zu beachten, dass im gesperrten Zustand der Pendelachse aufgrund der nicht unerheblichen Ölmenge eine gewisse Kompressibilität gegeben ist, die zu einer Nachgiebigkeit der Zylinder und damit der Pendelachse im Gesamten führen kann. Dies kann etwa dazu führen, dass die Pendelachse selbst im gesperrten Zustand ein gewisses Restspiel oder Kippspiel ermöglicht.

Vor diesem Hintergrund liegt der Offenbarung die Aufgabe zugrunde, eine verbesserte Steuereinheit für einen Zylinder einer Pendelachse einer mobilen Arbeitsmaschine, eine mit einer derartigen Steuereinheit versehene Zylinderbaugruppe sowie eine Vorrichtung zur Ansteuerung einer Pendelachse mit zwei derartigen Zylinderbaugruppen anzugeben, die eine einfache und sichere Ansteuerung der Pendelachse ermöglichen. Vorzugsweise ist die Vorrichtung mit geringem Aufwand implementierbar. Insgesamt soll sich eine Pendelachsbaugruppe ergeben, die robust und unempfindlich gegenüber äußeren Einflüssen ist. Insbesondere soll die Pendelachse etwa im Falle eines Leitungsbruchs vorhersehbar und sicher reagieren. Ferner soll sich im Betrieb im Pendelmodus sowie im Sperrmodus der Pendelachse eine günstige Charakteristik ergeben. Im blockierten Zustand soll die Pendelachse möglichst (hydraulisch) steif und möglichst spielfrei gesperrt sein.

Gemäß einem ersten Aspekt wird die Aufgabe der vorliegenden Offenbarung durch eine Steuereinheit für einen Zylinder einer Pendelachse einer mobilen Arbeitsmaschine gemäß Anspruch 1 gelöst.

Die Aufgabe der Erfindung wird auf diese Weise vollkommen gelöst.

Erfindungsgemäß ist der Steuerkolben derart gestaltet, dass das Druckmittel, also das Steuerfluid bzw. das Füllfluid, durch diesen hindurchströmen kann. Somit kann der Steuerkolben einerseits genutzt werden, um das Rückschlagventil zu schalten. Ferner dient der Steuerkolben gewissermaßen als Bestandteil einer Zuleitung zum Rückschlagventil und zum Zylinder zum Sperren der Pendelachse. Das durchströmende Fluid erzeugt Strömungskräfte, die wiederum auf den Steuerkolben einwirken. Auf diese Weise ist eine Kraftkomponente erzielbar, die die Funktion des Steuerkolbens und der Ventileinheit insgesamt günstig beeinflusst. Fällt beispielsweise ein eingangsseitiger Steuerdruck an der Seite des Steuerkolbens ab, die vom Rückschlagventil abgewandt ist, so kann das Fluid aus dem Zylinder in Richtung auf die Eingangsseite zurückströmen. Somit wird die Bewegung des Steuerkolbens weg vom Rückschlagventil unterstützt. Das Rückschlagventil kann sich schneller schließen. Das dynamische Verhalten der Pendelachse kann sich verbessern.

Die Steuereinheit ist vorzugsweise derart gestaltet, dass das gesamte Druckmittel, das die Steuereinheit durchströmt, durch den Steuerkolben strömt. Somit wird nicht etwa eine Teilmenge des Druckmittels abgezweigt, um den Steuerkolben anzusteuern und zu durchströmen. Derartige Lösungen "simulieren" eine Steuerleitung zusätzlich zur Versorgungsleitung. Stattdessen ist es gemäß der vorliegenden Offenbarung bevorzugt, möglichst den gesamten Fluidfluss durch den Steuerkolben hindurch zu leiten. In zumindest einigen Ausführungsbeispielen ist es vorgesehen, dass 100% des Volumenstroms den Steuerkolben durchströmen.

Die Begriffe eingangsseitig und ausgangsseitig sollten nicht einschränkend verstanden werden. Im Rahmen dieser Offenbarung ist der eingangsseitige Anschluss der Anschluss, der fluidisch mit der Versorgungsleitung gekoppelt ist. Der ausgangsseitige Anschluss ist der Anschluss, der fluidisch mit dem Zylinder gekoppelt ist. Es versteht sich, dass die Zuordnung der Begriffe Eingang und Ausgang aus Sicht des Druckmediums vertauscht ist, wenn sich ein Füllvolumen des Zylinders (also eine Hubkammer des Zylinders) leert und wenn das Druckmedium über den ausgangsseitigen Anschluss hin zum eingangsseitigen Anschluss strömt.

Die obige Formulierung betreffend den einzigen eingangsseitigen Anschluss schließt nicht aus, dass beispielsweise zusätzlich ein Entlüftungsanschluss vorgesehen ist. Dieser ist jedoch nicht primär zur Durchleitung des Druckmediums vorgesehen. Ferner schließt diese Formulierung nicht aus, dass etwas zwei parallele Leitungen und Anschlüsse vorgesehen sind, die jedoch die gleiche Funktion haben und mit dem gleichen Fluiddruck beaufschlagt sind. Derartige parallele Anordnungen entsprechen funktional einer einzigen Leitung und sind von der obigen Formulierung umfasst.

Bei der Steuereinheit ist ein einziger ausgangsseitiger Anschluss vorgesehen, der in den Zylinder mündet, genauer in eine Hubkammer des Zylinders. Gemäß Anspruch 1 weist jede Steuereinheit genau einen eingangsseitigen Anschluss und genau einen ausgangsseitigen Anschluss auf.

Die Gestaltung des Steuerkolbens als durchströmbarer Steuerkolben hat einerseits zur Folge, dass der anliegende Steuerdruck direkt auf das Schließelement des Rückschlagventils einwirkt. Jedoch ist das Schließelement derart vorgespannt, dass dieser Druck alleine das Rückschlagventil im zweiten Betriebsmodus nicht öffnen kann. Der Steuerkolben ist über sein Flächenverhältnis derart gestaltet, dass im ersten Betriebsmodus ein sicheres Öffnen und im zweiten Betriebsmodus ein sicheres Schließen des Rückschlagventils gewährleistet ist.

Ein weiterer Vorteil der durchströmbaren Gestaltung ist die kompakte Bauform der Steuereinheit. Die Steuereinheit kann beispielhaft patronenartig gestaltet und mit einem axialen Ende des Zylinders gekoppelt sein. Beispielhaft ist es vorstellbar, für den Zylinder ein Gehäuse vorzusehen, etwa ein Gussgehäuse, in dem das Gehäuse der Steuereinheit aufgenommen ist. Dies sorgt für kurze Leitungspfade.

Unter dem belasteten Zustand des Steuerkolbens ist ein Zustand zu verstehen, bei dem eingangsseitig ein Steuerdruck anliegt, der den Steuerkolben derart verlagert, dass das Rückschlagventil geöffnet wird. Unabhängig vom aktuellen Betriebsmodus der Steuereinheit ist der Steuerkolben für das Druckmittel/Fluid, also das Hydrauliköl, passierbar. Auf diese Weise wird im Betrieb eine Vorspannung ermöglicht.

Der erste Betriebsmodus kann auch als Pendelmodus bezeichnet werden. Der zweite Betriebsmodus kann auch als Sperrmodus bezeichnet werden. Im zweiten Betriebsmodus ist sichergestellt, dass zumindest der Kolben des belasteten Zylinders nicht einfahren kann. Im Pendelmodus wird gewährleistet, dass die Kolben beider Zylinder der Pendelachse einfahren und ausfahren können. Es versteht sich, dass im zweiten Betriebsmodus ein Nachsaugen entgegen der Sperrrichtung/Schließrichtung erfolgen kann. Demgemäß ist das Rückschlagventil im zweiten Betriebsmodus richtungsabhängig gesperrt, wobei gegebenenfalls zusätzlich eine Schließkraft überwunden werden muss

Ferner kann das Vorspannelement derart dimensioniert werden, dass ein Öffnen nur bei einem definierten hohen Druck in der (einzigen) Fluidleitung möglich ist. Dies trägt zur Erhöhung der Sicherheit der Pendelachse bei. Obwohl ein und dieselbe Leitung sowohl als Steuerleitung als auch als Versorgungsleitung genutzt wird, ist es unwahrscheinlich, dass Schwankungen beim Betriebsdruck der Arbeitsmaschine unerwünschte Schaltvorgänge auslösen.

Vorzugsweise ist die Ventileinheit als Ventileinheit ohne Vorentlastung gestaltet. Der Verzicht auf Vorkehrungen zur Vorentlastung hat einerseits höhere erforderliche Betätigungskräfte/-drücke zur Folge. Andererseits kann gewährleistet werden, dass übliche Druckschwankungen, die beim Betrieb der Arbeitsmaschine auftreten können, die Ventileinheit nicht öffnen können. Dies erhöht die Betriebssicherheit und verhindert ein unerwünschtes Entsperren im Betrieb.

Ferner erlaubt die Ausführung ohne Vorentlastung eine größere Gestaltungsfreiheit betreffend eine Vorspannung der Ventileinheit im zweiten Betriebsmodus. Dies hat bei einem Lastwechsel (von rechts nach links oder umgekehrt) den Vorteil, dass ein etwaiges Spiel zwischen den beiden Seite einer gesperrten Pendelachse deutlich reduziert wird. Das Verhalten der Pendelachse wird vorhersagbarer und sicherer. Da nur sehr hohe Drücke das Rückschlagventil der Ventileinheit öffnen, kann ein höherer Vorspanndruck gewählt werden, der gleichwohl hinreichend niedriger als der Öffnungsdruck ist. Dies erlaubt ein Nachsaugen durch den gerade nicht oder nur gering belasteten Zylinder der beiden Zylinder der Pendelachse. Je höher der Vorspanndruck, desto "steifer" verhält sich die Pendelachse bei Lastwechseln.

Gemäß einer beispielhaften Ausgestaltung der Steuereinheit ist die zumindest eine Durchgangsöffnung im Steuerkolben derart gestaltet, dass sich bei der Durchleitung eines Druckmittels eine Kraft auf den Steuerkolben ergibt, die richtungsgleich einer Strömungsrichtung des Druckmittels ist. Auf diese Weise ergeben sich insbesondere beim Schließen des Rückschlagventils im zweiten Betriebsmodus Vorteile.

Gemäß einer weiteren beispielhaften Ausgestaltung der Steuereinheit ist das Vorspannelement in einem entlüftbaren Aufnahmeabschnitt aufgenommen. Gemäß einer weiteren beispielhaften Ausgestaltung ist der Aufnahmeabschnitt über ein Rückschlagventil mit der Atmosphäre verbunden, das bei Überdruck im Aufnahmeabschnitt öffnet.

Dies hat den Vorteil, dass neben der durch das Vorspannelement auf den Steuerkolben aufgebrachten Kraft keine weiteren, insbesondere keine fluidischen Kräfte im Aufnahmeabschnitt entstehen, die das Betriebsverhalten des Steuerkolbens beeinflussen können. Ein zusätzliches Rückschlagventil zwischen dem Aufnahmeabschnitt und der Atmosphäre sorgt dafür, dass lediglich bei Überdruck im Aufnahmeabschnitt eine Entlüftung erfolgt. Dies hat den Vorteil, dass von außen keine Fremdkörper in den Aufnahmeabschnitt gelangen können. Auf diese Weise können Verschmutzungen durch das Eindringen von Wasser, Staub und Ähnlichem vermieden werden. Auch dies trägt dazu bei, dass sich für den Steuerkolben und insgesamt für die Steuereinheit ein vorhersagbares und sicheres Betriebsverhalten ergibt.

Gemäß einer weiteren beispielhaften Ausgestaltung der Steuereinheit ist der Steuerkolben in einem Gehäuse der Steuereinheit dichtend aufgenommen, wobei das Vorspannelement außerhalb eines abgedichteten Bereichs des Steuerkolbens mit diesem gekoppelt ist.

Auf diese Weise wird sichergestellt, dass die Durchströmbarkeit des Steuerkolbens nicht mit einer erhöhten Leckagegefahr einhergeht. Ein weiterer Vorteil ist, dass insgesamt die Anzahl der Dichtelemente minimierbar ist, da bei der verfolgten Lösung mit lediglich einer Anschlussleitung lediglich ein einziger Fluidpfad für die Ansteuerung und die Versorgung der Steuereinheit und des dieser zugeordneten Zylinders erforderlich ist.

Gemäß einer weiteren beispielhaften Ausgestaltung der Steuereinheit ist die Fluidleitung als kombinierte Steuerleitung und Versorgungsleitung gestaltet, wobei der einzige Anschluss als Versorgungsanschluss für eine einzige Fluidleitung ausgebildet ist, über die die Steuereinheit mit einem Betriebsarten-Steuerventil und einer weiteren Steuereinheit verbindbar ist.

Die Steuereinheit erlaubt die Ansteuerung der Zylinder einer Pendelachse über eine gemeinsame Leitung, die als Steuerleitung und Versorgungsleitung dient. Auf diese Weise kann der Verrohrungsaufwand minimiert werden. Das System ist einfach und kostengünstig aufgebaut.

Im Falle eines Leitungsbruchs ist gleichwohl ein vorhersagbares Verhalten und sicheres Verhalten gegeben, da die Rückschlagventile der den Zylindern zugeordneten Steuereinheit im Belastungsfall den Kolbenraum der jeweiligen Zylinder schnell und sicher verschließen. Von außen liegt im Falle eines Leitungsbruchs kein derart hoher Steuerdruck an, dass die Rückschlagventile geöffnet werden können.

Gemäß einem weiteren Aspekt wird die Aufgabe der Offenbarung durch eine Zylinderbaugruppe für eine Pendelachse einer mobilen Arbeitsmaschine gelöst, die mit einem Zylinder und einer Steuereinheit gemäß zumindest einer hierin beschriebenen Ausgestaltungen versehen ist.

Grundsätzlich ist es vorstellbar, einfachwirkende Zylinder für die Zylinderbaugruppe zu nutzen. Es ist jedoch auch vorstellbar, zwei Steuereinheiten mit einem doppeltwirkenden Zylinder zu koppeln, wobei eine erste Steuereinheit einer ersten Hubkammer und eine zweite Steuereinheit einer zweiten Hubkammer des doppeltwirkenden Zylinders zugeordnet ist.

Beispielhaft ist die Steuereinheit patronenartig gestaltet und mit einer Gehäusepatrone versehen, die mit einem Zylindergehäuse koppelbar ist. Das Patronengehäuse der Steuereinheit kann etwa in das Zylindergehäuse eingeschraubt, auf das Zylindergehäuse aufgesetzt und/oder an das Zylindergehäuse angeflanscht werden. Insgesamt ergibt sich eine kompakte und einfache Gestaltung der Zylinderbaugruppe, wobei mit lediglich einer einzigen Fluidleitung sowohl eine Versorgung als auch eine Steuerung realisiert ist. Es sind nur wenige Dichtungen erforderlich. Grundsätzlich ist auch eine verrohrte Ankopplung denkbar.

Gemäß einer weiteren beispielhaften Ausgestaltung der Zylinderbaugruppe ist zwischen der Ventileinheit und dem Zylinder ein Regelventil vorgesehen. Beispielhaft ist das Regelventil zwischen dem Rückschlagventil und einem Kolbenraum des Zylinders vorgesehen. Beispielsweise ist das Regelventil als Stromregelventil gestaltet. Beispielhaft ist das Regelventil als Drosselrückschlagventil ausgebildet. Gemäß einer weiteren beispielhaften Ausgestaltung der Zylinderbaugruppe erlaubt das Regelventil in Richtung auf den Anschluss einen geringeren Volumenstrom als das geöffnete Rückschlagventil.

Das Regelventil beeinflusst das Strömungsverhalten des in den Kolbenraum des Zylinders einströmenden bzw. des aus diesem ausströmenden Fluids. Beispielsweise ist das Regelventil derart gestaltet, dass bei einer Strömung vom Kolbenraum des Zylinders in Richtung auf den Anschluss für die Fluidleitung ein Volumenstrom durch das Regelventil grundsätzlich niedriger als ein Volumenstrom ist, den das geöffnete Rückschlagventil erlauben würde. Auf diese Weise wird gewährleistet, dass sich etwa beim Entsperren der Pendelachse ein hoher Druck im Kolbenraum des Zylinders nur gedämpft in Richtung auf den Anschluss ausbreitet. Dies sorgt insgesamt für eine reduzierte Belastung der Steuereinheit.

Ferner ist das Regelventil beispielsweise derart gestaltet, dass ein richtungsabhängiger Volumenstrom zwischen der Ventileinheit und dem Zylinder gegeben ist, wobei in Richtung auf die Ventileinheit ein niedrigerer Volumenstrom als in Richtung auf den Zylinder gegeben ist.

Gemäß einer beispielhaften Ausführungsform ist das Regelventil baulich in die Ventileinheit integriert. Dies kann beispielsweise ein gemeinsames Gehäuse für das Rückschlagventil und das Regelventil umfassen.

Auch diese Maßnahme kann zur Verringerung der Belastung der Steuereinheit beitragen. Staudrücke im Bereich der Steuereinheit bei einfahrendem Zylinder werden vermieden. Ferner wird ein schnelles Schließen des Rückschlagventils der belasteten Zylindereinheit bei abfallendem Steuerdruck begünstigt.

Gemäß einem weiteren Aspekt wird die Aufgabe der Offenbarung durch eine Vorrichtung zur Ansteuerung einer Pendelachse einer mobilen Arbeitsmaschine gelöst, die zwei Zylinderbaugruppen gemäß zumindest einer hierin genannten Ausführungsform umfasst, wobei die Zylinderbaugruppen über die Fluidleitung miteinander verbunden sind, und wobei die Fluidleitung ferner mit einem Betriebsarten-Steuerventil verbunden ist. Die Fluidleitung ist also beispielsweise als Y-Leitung gestaltet und mit drei Anschlüssen versehen, von denen ein erster einer ersten Zylinderbaugruppe, ein zweiter einer zweiten Zylinderbaugruppe und ein dritter dem Betriebsarten-Steuerventil zugeordnet ist.

Grundsätzlich ist es auch vorstellbar, die Vorrichtung mit einer Zylinderbaugruppe zu versehen, die einen doppeltwirkenden Zylinder und zwei Steuereinheiten aufweist, wobei eine erste Steuereinheit einer ersten Hubkammer und eine zweite Steuereinheit einer zweiten Hubkammer des doppeltwirkenden Zylinders zugeordnet ist. Auch bei dieser alternativen Ausgestaltung lassen sich die beschriebenen Vorteile verwirklichen.

Das Steuerventil ist beispielhaft als Wege-Ventil gestaltet, insbesondere als Drei/Zwei-Wege-Ventil.

Gemäß einer beispielhaften Ausgestaltung der Vorrichtung verbindet das Steuerventil in einer ersten Schaltstellung, die dem ersten Betriebsmodus entspricht, die Fluidleitung mit einer Steuerdruckleitung, wobei das Steuerventil in einer zweiten Schaltstellung, die dem zweiten Betriebsmodus entspricht, die Fluidleitung mit einer Tankleitung verbindet, wobei in der Tankleitung ein Vorspanndruck anliegt, und wobei in der Steuerdruckleitung ein Steuerdruck anliegt. Der Vorspanndruck muss nicht zwingend bei jeder denkbaren Variante vorhanden sein.

Es ist von Vorteil, die Tankleitung bewusst nicht drucklos auszulegen. Über die Tankleitung kann nämlich in der Sperrstellung der Pendelachse eine gezielte Vorspannung des Zylinders der nicht oder nur gering belasteten Zylinderbaugruppe erfolgen. Es wird also ein Druckmittelfluss hin zum aktuell unbelasteten Zylinder ermöglicht. Somit wird ein Nachsaugen ermöglicht, welches ein etwaiges Kippspiel bei Lastwechseln reduziert oder eliminiert.

Auf diese Weise kann ein Spiel der Pendelachse minimiert oder verhindert werden, das auf die Ölkompressibilität, Leitungsdehnungen und dgl. zurückführbar ist. Im gesperrten Zustand der Pendelachse führen die genannten Effekte grundsätzlich zu einem Kippen des Aufbaus der Arbeitsmaschine in Richtung auf die belastete Seite. Dies hat u.U. zur Folge, dass auf der unbelasteten/minderbelasteten Seite ein geringes Spiel entsteht. Dies wäre etwa dann spürbar, wenn der Aufbau der Arbeitsmaschine kippt, also wenn die belastete Seite wechselt.

Wenn nun jedoch eine Vorspannung der unbelasteten Seite sichergestellt wird, ist dieses Spiel beim Lastwechsel nicht spürbar. Die Steifigkeit der Pendelachse bei Lastwechseln lässt sich erhöhen. Es ergibt sich ein vorhersagbares Verhalten der Arbeitsmaschine bei Lastwechseln im Sperrzustand. Stoßartige und/oder ruckartige Belastungen, die etwa auf einen abrupten Kontakt der Kolbenstangen der Zylinder mit der Achse zurückgehen, können vermieden oder zumindest minimiert werden.

Der Vorspanndruck in der Tankleitung ist grundsätzlich niedriger als der Steuerdruck in der Steuerdruckleitung. Auf diese Weise kann ein nicht erwünschtes Umschalten zwischen den Betriebszuständen vermieden werden.

Im ersten Betriebsmodus der Vorrichtung sind die Rückschlagventile der Steuereinheiten beider Zylinderbaugruppen durch den Steuerdruck der Steuerdruckleitung geöffnet.

Im zweiten Betriebsmodus der Vorrichtung ist das Rückschlagventil der Ventileinheit einer höher belasteten Zylinderbaugruppe durch den im Zylinder dieser Zylinderbaugruppe herrschenden Druck geschlossen, wobei eine minderbelastete Zylinderbaugruppe, insbesondere deren Ventileinheit, durch den Vorspanndruck der Tankleitung bedarfsweise vorgespannt ist. Aufgrund der Ölkompressibilität entsteht beim belasteten Zylinder eine Volumenreduzierung der eingesperrten Ölmenge. Im gegenüberliegenden, nicht belasteten Zylinder wird durch die gekoppelte Bewegung zusätzliches Volumen freigegeben, welches mit Öl aus der Zuleitung über das Rückschlagventil nachgeladen wird. Bei anschließender Entlastung des belasteten Zylinders kann sich aufgrund der mechanischen Koppelung der Zylinder über die Pendelachse und dem Fahrgestell die komprimierte Ölsäule nicht mehr auf den ursprünglichen Wert entlasten. Die nachgeladene Ölmenge verhindert das. Aus diesem Zusammenhang ergibt sich eine deutliche Erhöhung der Vorspannung der beiden Zylinder. Dies wiederum ergibt eine vorteilhafte, deutlich steifere Abstützung.

Die Ansteuerung der Zylinderbaugruppen der Vorrichtung erfolgt über lediglich eine einzige Leitung, die als Steuerleitung und als Versorgungsleitung dient.

Vorzugsweise wird eine Vorrichtung gemäß zumindest einem der hierin genannten Aspekte bei einer Pendelachsbaugruppe für eine mobile Arbeitsmaschine genutzt, um eine Pendelachse der Pendelachsbaugruppe selektiv in einem Sperrzustand und einem Pendelzustand zu betreiben. Je nach der aktuellen Schaltstellung des Betriebsarten-Steuerventils befindet sich die Pendelachse im Sperrzustand oder im Pendelzustand.

Gemäß einem weiteren Aspekt der vorliegenden Offenbarung wird die Aufgabe der Erfindung durch eine mobile Arbeitsmaschine gelöst, wobei die Arbeitsmaschine zumindest eine Pendelachse und eine Vorrichtung zur Ansteuerung der Pendelachse gemäß zumindest einer der hierin genannten Ausgestaltungen aufweist, um die Pendelachse zu aktivieren, wobei die Pendelachse vorzugsweise als starre Pendelachse ausgeführt und schwenkbar an einem Gestell der Arbeitsmaschine aufgenommen ist, wobei sich die Zylinderbaugruppen der Vorrichtung zwischen einem dem Gestell zugeordneten Oberteil und einem Unterteil der Pendelachse erstrecken, und wobei das Oberteil und das Unterteil in einem Pendelzustand/Pendelmodus relativ zueinander verschwenkbar sind.

Weitere Merkmale und Vorteile der Erfindung ergeben sich aus der nachfolgenden Beschreibung bevorzugter Ausführungsbeispiele unter Bezugnahme auf die Zeichnungen. Es zeigen:
- Fig. 1: eine perspektivische Ansicht einer beispielhaften Ausführungsform einer mobilen Arbeitsmaschine in Form eines Radladers;
- Fig. 2: eine schematische frontale Ansicht einer weiteren Ausführungsform einer mobilen Arbeitsmaschine;
- Fig. 3: eine schematische Symboldarstellung einer Ausführungsform einer Vorrichtung zur Ansteuerung einer Pendelachse;
- Fig. 4: eine schematische Symboldarstellung einer Ausführungsform einer Ventilbaugruppe für eine blockierbare Pendelachse; und
- Fig. 5: eine Schnittdarstellung durch eine Steuereinheit für einen Zylinder einer Pendelachse.

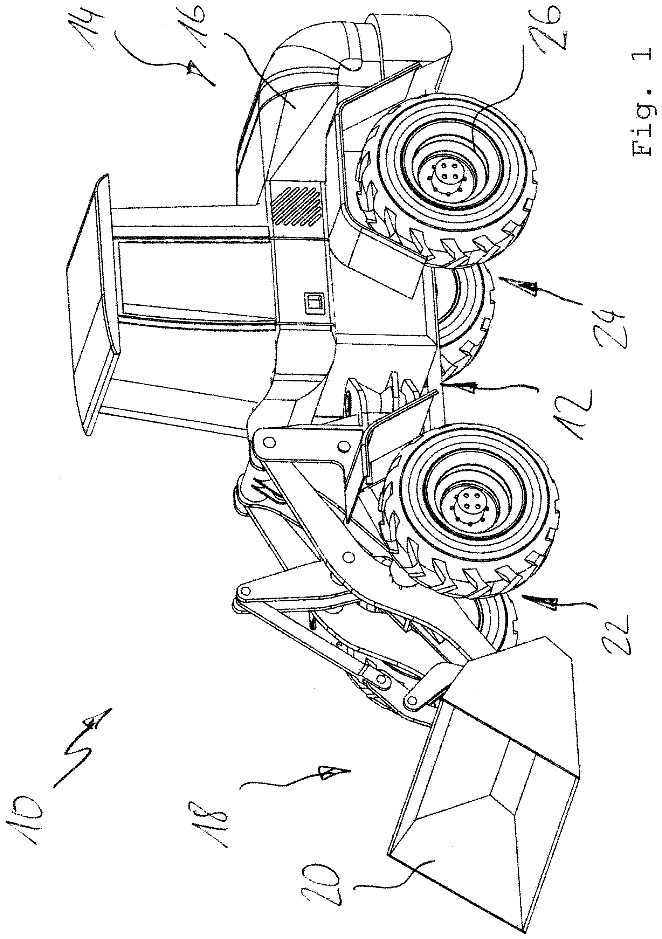

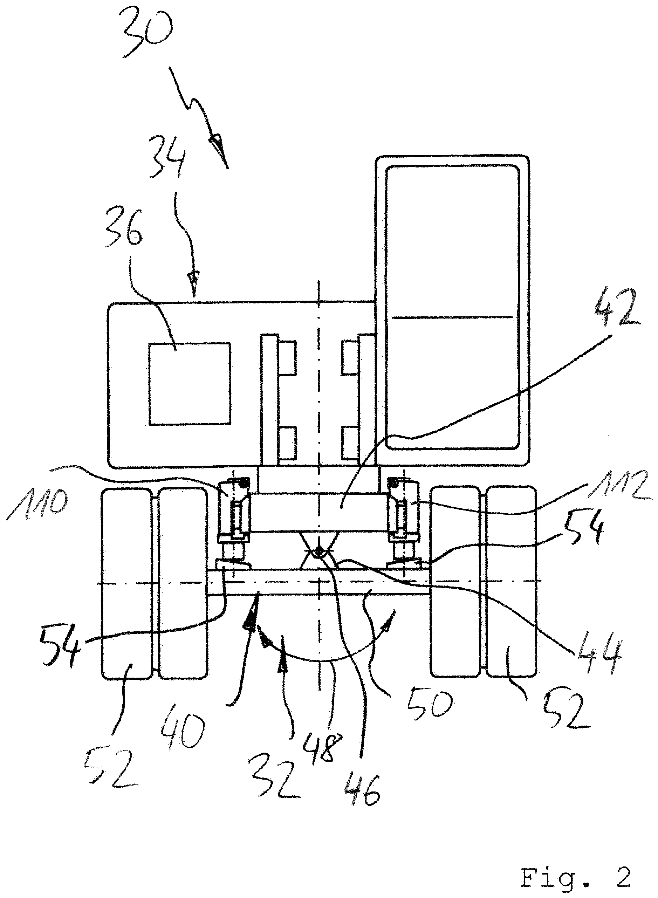

Fig. 1 zeigt eine beispielhafte perspektivische Darstellung einer mobilen Arbeitsmaschine 10, die etwa als Radlader ausgeführt ist. Ergänzend veranschaulicht Fig. 2 eine schematische frontale Ansicht einer weiteren mobilen Arbeitsmaschine 30, die etwa als Bagger ausgestaltet ist, wobei auf die Darstellung eines Auslegers sowie eines Anbauwerkzeugs aus Veranschaulichungsgründen verzichtet wird. Bei den mobilen Arbeitsmaschinen 10, 30 handelt es sich um solche, die zumindest eine Pendelachse umfassen.

Allgemein können mobile Arbeitsmaschinen auch als mobile Arbeitsgeräte bezeichnet werden. Neben den in den Fig. 1 und 2 veranschaulichten Ausführungsformen mobiler Arbeitsmaschinen 10, 30 sind auch forstwirtschaftliche Arbeitsmaschinen, Transportfahrzeuge, landwirtschaftliche Arbeitsmaschinen und Fahrzeuge sowie Anhänger hierfür vorstellbar.

Die in Fig. 1 veranschaulichte Arbeitsmaschine 10 weist ein Fahrgestell 12 auf, das etwa einen Rahmen umfasst. Am Fahrgestell 12 ist ein Aufbau 14 ausgebildet, der etwa einen Führerstand oder ein Führerhaus umfasst. Ferner ist am Fahrgestell 12 ein Antrieb 16 aufgenommen, der zumindest teilweise vom Aufbau 14 abgedeckt bzw. eingehaust ist. Bei dem Antrieb 16 kann es sich etwa um einen verbrennungsmotorischen Antrieb handeln.

Ferner ist an der mobilen Arbeitsmaschine 10, insbesondere an deren Fahrgestell 12, ein Anbaugerät 18 aufgenommen und etwa über einen Auslegermechanismus mit diesem verbunden. Bei dem Anbaugerät 18 kann es sich etwa um ein Werkzeug 20 in Form einer Schaufel handeln. Andere Anbaugeräte 18 sind vorstellbar.

Die in Fig. 1 gezeigte mobile Arbeitsmaschine 10 umfasst eine erste Achse 22 und eine zweite Achse 24, die in Längsrichtung der Arbeitsmaschine 10 von der ersten Achse 22 versetzt ist. Vorzugsweise ist zumindest eine der beiden Achsen 22, 24 als sog. Pendelachse ausgeführt. An den Achsen 22, 24 sind Räder 26 aufgenommen.

Pendelachsen erlauben allgemein eine ausgeprägte Verschränkung zwischen dem Fahrgestell 12 und einem Achskörper der Pendelachse. Auf diese Weise eignen sich die mobilen Arbeitsmaschinen 10, 30 auch für Einsätze in schwerem Gelände.

Ergänzend wird auf Fig. 2 Bezug genommen, die in symbolhafter Darstellung eine weitere Ausführungsform einer mobilen Arbeitsmaschine 30 veranschaulicht. Auch die Arbeitsmaschine 30 umfasst einen Unterwagen 32, an dem ein Oberwagen 34 aufgenommen ist. Ferner weist die Arbeitsmaschine 30 eine Bordhydraulik 36 auf, die in Fig. 2 lediglich symbolhaft dargestellt ist. Die Bordhydraulik 36 kann etwa mit einem Antriebsmotor der Arbeitsmaschine 30 gekoppelt sein, so dass an Bord der Arbeitsmaschine 30 Druck erzeugt werden kann. Die Bordhydraulik 36 treibt beispielhaft einen Ausleger bzw. ein Anbauwerkzeug der Arbeitsmaschine 30 an (in Fig. 2 nicht dargestellt).

Ferner weist die Arbeitsmaschine 30 zumindest eine Pendelachse 40 auf, die ein Oberteil 42 und ein Unterteil 44 (des Unterwagens 32) über ein Gelenk 46 gelenkig miteinander koppelt. Beispielhaft kann das Oberteil 42 als Unterwagenrahmen bezeichnet werden. Das Unterteil 44 kann als Achse bzw. Achsanordnung bezeichnet werden. Das Oberteil 42 ist beispielhaft einer Rahmenstruktur des Unterwagens 32 zugeordnet. Das Unterteil 44 ist beispielhaft einer Achsseite bzw. einem Fahrwerk der Arbeitsmaschine 30 zugeordnet.

Die Pendelachse 40 umfasst einen Achskörper 50, der als in sich starrer Achskörper gestaltet ist. Der Achskörper 50 verbindet zwei Räder 52, die an einem jeweiligen Ende des Achskörpers 50 aufgenommen sind. Der Achskörper 50 ist über das Gelenk 46 mit dem Unterwagen 32 gelenkig gekoppelt. Mit anderen Worten kann der Achskörper 50 gegenüber dem Oberwagen 34 der Arbeitsmaschine 30 pendeln, wenn die Arbeitsmaschine 30 in unwegsamem Gelände bewegt wird.

Das Gelenk 46 der Pendelachse 40 ist etwa mittig entlang der Längserstreckung des Achskörpers 50 angeordnet. Ein in Fig. 2 mit 48 bezeichneter gekrümmter Doppelpfeil veranschaulicht eine Schwenkbewegung oder Pendelbewegung des Achskörpers 50 relativ zum Oberteil 42 des Unterwagens 32, bzw. zum Oberwagen 34.

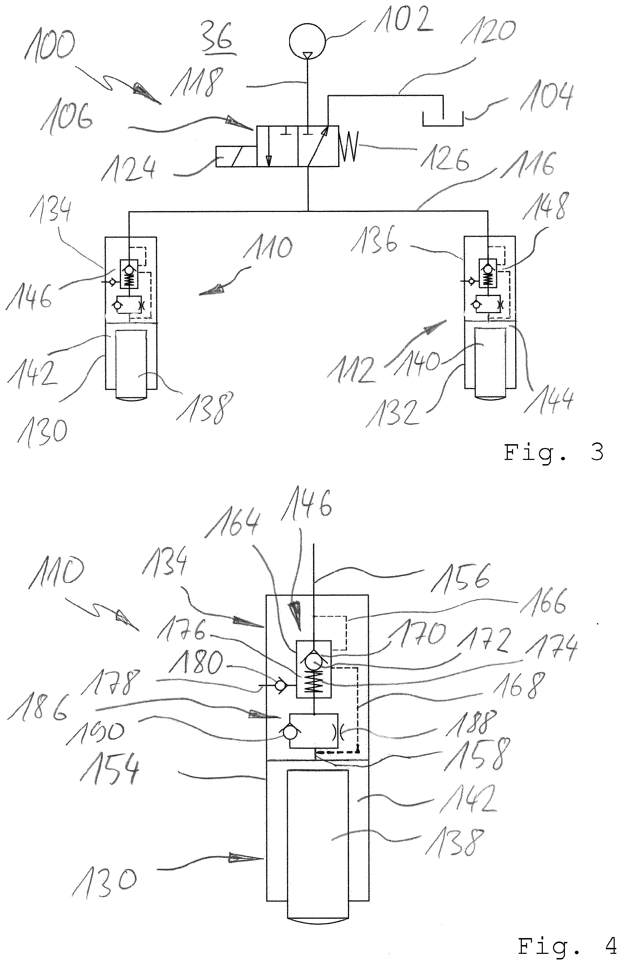

Es sind Anwendungsfälle bzw. Einsatzbedingungen vorstellbar, bei denen es vorteilhaft ist, die Pendelachse 40 zu blockieren bzw. zu arretieren. Mit anderen Worten geht es darum, die Schwenkbewegung des Achskörpers 50 relativ zum Oberteil 42 zu blockieren bzw. zu unterbinden. Dies kann grundsätzlich mit einer Blockiervorrichtung oder Arretiervorrichtung 100 herbeigeführt werden, die nachfolgend mit ergänzender Bezugnahme auf Fig. 3 näher veranschaulicht wird.

In Fig. 2 sind beispielhaft eine erste Zylinderbaugruppe 110 und eine zweite Zylinderbaugruppe 112 dargestellt, die gestellseitig, etwa am Unterwagen bzw. Oberteil 42 aufgenommen sind. Stempel oder Kolben der Zylinder der Zylinderbaugruppen 110, 112 können ausfahren und Druckstücke 54 des Achskörpers 50 kontaktieren, um dessen Schwenkbewegung zu unterbinden. Auf diese Weise kann die Pendelachse 40 gesperrt werden, wenn die Zylinder der Zylinderbaugruppen 110, 112 blockiert sind.

Fig. 3 zeigt eine schematische Darstellung einer insgesamt mit 100 bezeichneten Vorrichtung zur Ansteuerung einer Pendelachse einer mobilen Arbeitsmaschine. Die Vorrichtung 100 ist beispielhaft mit der Bordhydraulik 36 der Arbeitsmaschine gekoppelt. Dies kann etwa die Kopplung mit einer Pumpe 102, einem Speicher oder dgl. umfassen. Ferner kann dies die Kopplung mit einem Tank 104 umfassen.

Die Vorrichtung 100 weist ein Betriebsarten-Steuerventil 106 auf, das etwa als Ventilblock oder als Teil eines Ventilblocks gestaltet ist. Das Steuerventil 106 ist insbesondere als Wege-Ventil ausgeführt, vorzugsweise als Drei/Zwei-Wege-Ventil.

Die Vorrichtung 100 umfasst ferner eine erste Zylinderbaugruppe 110 und eine zweite Zylinderbaugruppe 112, die zwei Seiten der Pendelachse 40 zugeordnet sind, vgl. hierzu auch Fig. 2. Die Vorrichtung ist in einem ersten Betriebsmodus und in einem zweiten Betriebsmodus betreibbar. Im ersten Betriebsmodus ist ein Pendeln der Pendelachse 40 freigegeben. Im zweiten Betriebsmodus ist die Pendelachse 40 gesperrt.

Das Steuerventil 106 ist über eine Anschlussleitung 116 mit der Zylinderbaugruppe 110 und der Zylinderbaugruppe 112 gekoppelt. Die Anschlussleitung 116 ist etwa Y-förmig gestaltet. Zwischen dem Steuerventil 106 und der ersten Zylinderbaugruppe 110 und der zweiten Zylinderbaugruppe 112 ist neben der Anschlussleitung 116 keine weitere Leitung vorgesehen.

Das Steuerventil 106 verbindet die Anschlussleitung 116 im ersten Betriebsmodus mit einer Steuerdruckleitung 118, die beispielhaft mit der Pumpe 102 gekoppelt ist. Im zweiten Betriebsmodus verbindet das Steuerventil 106 die Anschlussleitung 116 mit einer Tankleitung 120, die mit dem Tank 104 verbunden ist. In der Steuerdruckleitung 118 liegt ein Steuerdruck an. Gemäß zumindest einigen Aspekten der vorliegenden Offenbarung wird vorgeschlagen, auch in der Tankleitung 120 zumindest eine leichte Vorspannung vorzusehen. Auf diese Weise kann im zweiten Betriebsmodus über die Tankleitung 120 ein unter Druck stehendes Fluid (Hydrauliköl) in die Anschlussleitung 116 und schlussendlich in zumindest eine der Zylinderbaugruppen 110, 112 einströmen.

Das in Fig. 3 beispielhaft dargestellte Steuerventil 106 weist einen Aktor 124 und ein Rückstellelement 126 auf. Der Aktor 124 ist beispielsweise als elektromagnetischer Aktor gestaltet. Das Rückstellelement 126 ist beispielhaft als Rückstellfeder gestaltet. In einem nicht aktiven/nicht bestromten Zustand des Aktors 124 befindet sich das Steuerventil 106 in einer Schaltstellung, die dem zweiten Betriebsmodus entspricht. Im aktiven/bestromten Zustand des Aktors 124 befindet sich das Steuerventil 106 in einer Schaltstellung, die dem ersten Betriebsmodus entspricht.

Die erste Zylinderbaugruppe 110 weist einen Zylinder 130 auf, der mit einer Steuereinheit 134 gekoppelt ist. Die zweite Zylinderbaugruppe 112 weist einen Zylinder 132 auf, der mit einer Steuereinheit 136 gekoppelt ist. Der Zylinder 130 umfasst eine Kolbenstange 138, die in einem Kolbenraum 142 aufgenommen ist. Der Zylinder 132 umfasst eine Kolbenstange 140, die in einem Kolbenraum 144 aufgenommen ist. Die erste Steuereinheit 134 umfasst eine Ventileinheit 146. Die zweite Steuereinheit 136 umfasst eine Ventileinheit 148.

Vorzugsweise ist die Tankleitung 120 zumindest teilweise vorgespannt. Dies hat im zweiten Betriebsmodus der Vorrichtung 100, also im Sperrmodus, den Vorteil, dass etwa im Falle einer Druckmittelkompression einer höherbelasteten Zylinderbaugruppe der beiden Zylinderbaugruppen 110, 112 ein Ausgleich und eine geringe Vorspannung der anderen der beiden Zylinderbaugruppen 110, 112 erfolgt. Auf diese Weise kann etwa bei einem Lastwechsel von der Zylinderbaugruppe 110 auf die Zylinderbaugruppe 112, oder umgekehrt, ein Spiel und somit ein spürbares Kippen vermieden werden. Die auf dem Druck in der Tankleitung 120 basierende Vorspannung ist nicht unbedingt hoch. Bei einem Lastwechsel verteilt sich aber die Vorspannung durch das komprimierte Öl vom zuvor belasteten Zylinder nun auf beide Zylinderbaugruppen 110, 112. Die resultierende Vorspannung in beiden Zylinderbaugruppen 110, 112 kann deutlich höher sein.

Vorzugsweise sind die Zylinderbaugruppen 110, 112 gleichartig oder sogar identisch gestaltet. Nachfolgend wird mit Bezug auf Fig. 4 anhand einer schematischen Teildarstellung der Vorrichtung 100 die Gestaltung der Zylinderbaugruppe 110 weiter detailliert. Es versteht sich, dass die Zylinderbaugruppe 112 ähnlich oder sogar identisch gestaltet sein kann.

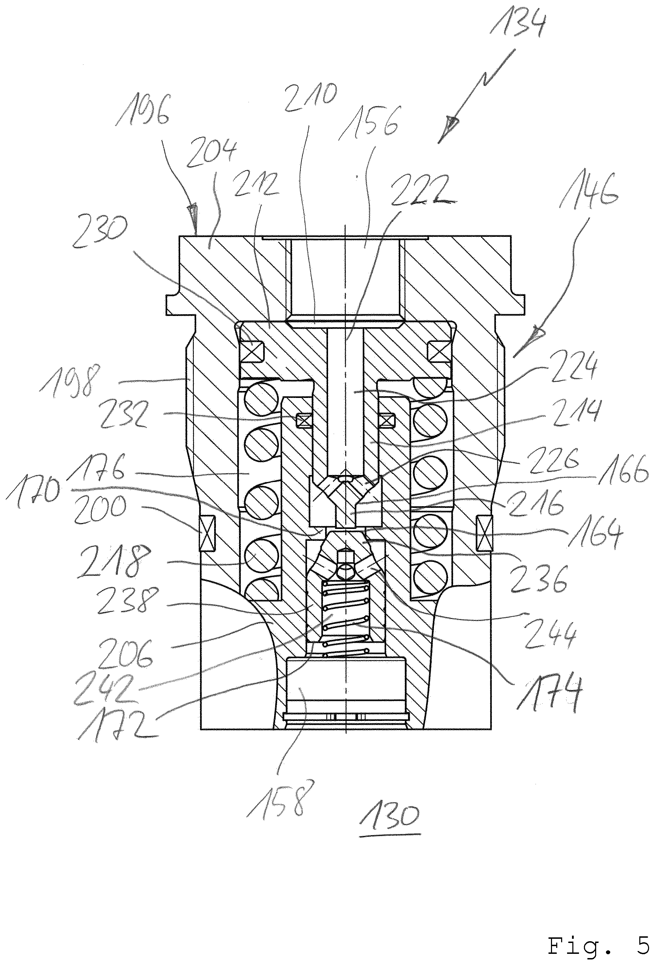

Die Zylinderbaugruppe 110 umfasst ein Zylindergehäuse 154, in dem die Kolbenstange 138 aufgenommen ist. Gemäß zumindest beispielhaften Ausgestaltungen ist auch die Steuereinheit 134 im Zylindergehäuse 154 aufgenommen, beispielhaft über ein patronenartig gestaltetes Gehäuse 196, vgl. hierzu auch Fig. 5.

Die Steuereinheit 134 weist einen Anschluss 156 auf, über den die Anschlussleitung 116 an die Steuereinheit 134 ankoppelt. In Richtung auf den Zylinder 130 weist die Steuereinheit 134 einen Anschluss 158 auf. Der Anschluss 158 kann beispielsweise eine Kanalöffnung oder -mündung in Richtung auf den Kolbenraum 142 umfassen.

Die Ventileinheit 146 der Steuereinheit 134 weist ein Rückschlagventil 164 auf. Das Rückschlagventil 164 ist über einen Steuerkolben 166 steuerbar, vgl. hierzu auch Fig. 5. In Fig. 4 dient zur Veranschaulichung des Einflusses des Steuerkolbens 166 auf das Rückschlagventil 164 eine gestrichelte Linie zwischen dem Anschluss 156 und dem Rückschlagventil 164. Ferner veranschaulicht eine mit 168 bezeichnete gestrichelte Linie in Fig. 4, dass auch der im Kolbenraum 142 des Zylinders 130 herrschende Druck den Zustand des Rückschlagventils 164 beeinflusst.

Das Rückschlagventil 164 umfasst einen Sitz 170 und ein Schließelement 172, das dichtend am Sitz 170 zur Anlage kommen kann. Ferner ist ein Vorspannelement 174 vorgesehen, das das Schließelement 172 in Richtung auf den Sitz 170 vorspannt. Die durch das Vorspannelement 174 aufgebrachte Schließkraft wirkt weg vom Zylinder 130 in Richtung auf den Anschluss 156. Zumindest dann, wenn die Vorrichtung 100 (vgl. Fig. 3) im zweiten Betriebsmodus betrieben wird, ist das Rückschlagventil 164 in seiner Sperrrichtung (Schließrichtung) geschlossen. Dies wird einerseits durch das Schließelement 172 sichergestellt. Ferner drängt auch ein etwaiger Überdruck im Kolbenraum 142 des Zylinders 130 das Schließelement 172 in Richtung auf die Schließstellung des Rückschlagventils 164. Dies schließt nicht aus, dass im zweiten Betriebsmodus durch den Zylinder 130 ein Nachsaugen entgegen der Sperrrichtung erfolgt.

Ferner ist in Fig. 4 eine Entlüftungsleitung 178 angedeutet, die die Ventileinheit 146 mit der Umgebung, also mit der Atmosphäre, verbindet. In der Entlüftungsleitung 178 ist beispielhaft ein Rückschlagventil 180 ausgebildet, das dann öffnet, wenn in einem bestimmten Bereich der Ventileinheit 146 ein höherer Druck herrscht als der Atmosphärendruck. Auf diese Weise kann sich eine effektive Entlüftung ergeben. Ferner kann durch das Rückschlagventil 180 das Eindringen von Staub, Schmutz, Wasser und dgl. von außen in Richtung auf die Ventileinheit 146 unterbunden werden.

Insbesondere ist es von Vorteil, wenn die Entlüftungsleitung 178 mit einem Aufnahmeabschnitt 176 gekoppelt ist, in dem ein Vorspannelement 218 für den Steuerkolben 166 aufgenommen ist, vgl. hierzu wiederum die Darstellung in Fig. 5.

Fig. 4 zeigt ferner, dass zwischen der Ventileinheit 146 mit dem Rückschlagventil 164 und dem Kolbenraum 142 beispielsweise ein Regelventil 186 angeordnet ist. Beispielhaft umfasst das Regelventil 186 einen Drosselabschnitt, der ein Drosselventil 188 umfasst, und einen Rückschlagabschnitt, der ein Rückschlagventil 190 umfasst, auf. Der durch das Drosselventil 188 und das Rückschlagventil 190 symbolhaft verzweigte Fluidpfad durch das Regelventil 186 wird beim Anschluss 158 wieder zusammengeführt. Es versteht sich, dass die Elemente 188 und 190 auch zu einem einzigen Bauelement zusammengefasst sein können. Insofern handelt es sich bei den Figuren 3 und 4 vorrangig um schematische Darstellungen zu Veranschaulichungszwecken.

Das Regelventil 186 ist derart ausgelegt, dass in Richtung auf den Kolbenraum 142 eine Strömung mit größeren Volumenströmen als aus dem Kolbenraum 142 hinaus in Richtung auf die Ventileinheit 146 ermöglicht ist. Ferner ist vorzugsweise ein durch das Regelventil 186 definierter maximaler Volumenstrom vom Kolbenraum 142 in Richtung auf das Rückschlagventil 164 der Ventileinheit 146 kleiner als ein theoretisch möglicher Volumenstrom gleicher Richtung durch das Rückschlagventil 164. Das Regelventil 186 entlastet Bauteile der Steuereinheit 134, insbesondere der Ventileinheit 146. Ferner ergibt sich ein günstiges Betriebsverhalten der Zylinderbaugruppe 110.

Ergänzend wird auf die teilweise geschnittene Detaildarstellung der Steuereinheit 134 in Fig. 5 verwiesen. Fig. 5 veranschaulicht weitere Aspekte und Detailgestaltungen der in den Fig. 3 und 4 schematisch gezeigten Vorrichtung 100, insbesondere der Steuereinheit 134.

Fig. 5 veranschaulicht insbesondere eine beispielhafte Gestaltung der Ventileinheit 146 der Steuereinheit 134. Aus Veranschaulichungsgründen ist beispielsweise das Regelventil 186 in Fig. 5 nicht explizit dargestellt. Ferner enthält Fig. 5 wiederum aus Veranschaulichungsgründen keine explizite Darstellung der Entlüftungsleitung 178 mit dem Rückschlagventil 180, vgl. hierzu jeweils Fig. 4.

Gleichwohl ist die Entlüftungsleitung 178 zumindest gemäß beispielhaften Ausführungsformen mit dem Aufnahmeabschnitt 176 verbunden, um diesen zu entlüften. Der Aufnahmeabschnitt 176 ist in Fig. 5 explizit dargestellt.

Die Ventileinheit 146 umfasst das Rückschlagventil 164, das mit dem Steuerkolben 166 gekoppelt ist. Die Ventileinheit 146 ist in einem Gehäuse 196 aufgenommen, das die gesamte Steuereinheit 134 beherbergen kann. Beispielhaft ist das Gehäuse 196 patronenartig gestaltet und mit einem Gewinde 198 versehen. Das Gehäuse 196 ist in das Zylindergehäuse 154 (Fig. 4) einschraubbar oder in ähnlicher Weise mit diesem koppelbar. Zur Abdichtung zwischen dem Gehäuse 196 und dem Zylindergehäuse 154 ist eine Dichtung 200 vorgesehen.

Das Gehäuse 196 umfasst beispielhaft einen ersten Gehäuseabschnitt 204 und einen zweiten Gehäuseabschnitt 206. Der erste Gehäuseabschnitt 204 kann auch als äußerer Gehäuseabschnitt bezeichnet werden. Der zweite Gehäuseabschnitt 206 kann auch als innerer Gehäuseabschnitt bezeichnet werden.

Am inneren Gehäuseabschnitt 206 ist der Sitz 170 für das Rückschlagventil 164 ausgebildet. Ferner weist der innere Gehäuseabschnitt 206 eine Führung für das Schließelement 172 auf.

Ferner weist das Gehäuse 196 eine Aufnahme für den Steuerkolben 166 auf. Die Aufnahme für den Steuerkolben 166 umfasst beispielsweise einen Kolbenraum 210, der gemeinsam durch den äußeren Gehäuseabschnitt 204 und den inneren Gehäuseabschnitt 206 gebildet wird. An den Kolbenraum 210 schließt sich ein Aufnahmeabschnitt 176 an, auf den bereits im Zusammenhang mit Fig. 4 verwiesen wurde. Vorzugsweise erstreckt sich die Entlüftungsleitung 178 mit dem Rückschlagventil 180 zwischen dem Aufnahmeabschnitt 176 und der Atmosphäre.

Der Steuerkolben 166 umfasst ein tellerartiges Kopfstück 212, an das sich ein Zylinder 214 anschließt. In Richtung auf das Rückschlagventil 164 ist ein Druckstück 216 ausgebildet, das zumindest zeitweise das Schließelement 172 des Rückschlagventils 164 kontaktiert, um dieses bedarfsweise vom Sitz 170 in Richtung auf den Zylinder 130 abzuheben. Das Kopfstück 212 ist am ersten Gehäuseabschnitt 204 aufgenommen. Der Zylinder 214 ist am zweiten Gehäuseabschnitt 206 aufgenommen. Die Gehäuseabschnitte 204, 206 stellen eine Führung für den Steuerkolben 166 bereit.

Dem Steuerkolben 166 ist ein Vorspannelement 218 zugeordnet, das beispielhaft als Druckfeder gestaltet ist. Das Vorspannelement 218 ist im Aufnahmeabschnitt 176 aufgenommen, der über die Entlüftungsleitung 178 entlüftet wird, sofern im Aufnahmeabschnitt 176 ein höherer Druck als in der Umgebung herrscht.

Das Vorspannelement 218 erstreckt sich koaxial zum Rückschlagventil 164 und zum Steuerkolben 166. Das Vorspannelement 218 stützt sich am Gehäuse 196, insbesondere am inneren Gehäuseabschnitt 206 ab. Das Vorspannelement 218 stützt sich ferner an seinem entgegengesetzten Ende am Kopfstück 212 des Steuerkolbens 166 ab und drängt diesen in Richtung auf den Anschluss 156, also weg vom Zylinder 130.

Der Steuerkolben 166 ist mit zumindest einer Durchgangsöffnung 222 versehen. Dies umfasst beispielhaft einen Kanal 224, der das Kopfstück 212 und den Zylinder 214 durchragt. An den Kanal 224 schließen sich Kanäle 226 an, die etwa sternförmig angeordnet sind. Die Kanäle 226 sind zu einer Längsachse des Steuerkolbens 166 geneigt. Über die Kanäle 224, 226 kann das Druckmittel (Fluid) den Steuerkolben 166 durchströmen.

Der Steuerkolben 166 ist ferner über Dichtungen 230, 232 gegenüber dem Gehäuse 196 abgedichtet. Auf diese Weise tritt auch bei einer Durchströmung des Steuerkolbens 166 mit dem Druckmittel kein Druckmittelverlust auf.

Das Schließelement 172 des Rückschlagventils 164 umfasst einen frontalen Konus 236, der dem Druckstück 216 des Steuerkolbens 166 zugewandt ist. An den Konus 236 schließt sich ein Zylinder 238 an. Im Zylinder 238 ist eine Aufnahme 242 für das Vorspannelement 174 angeordnet. Das Vorspannelement 174 drängt das Schließelement 172 in Richtung auf die Schließstellung des Rückschlagventils 164. Das Vorspannelement 174 stützt sich mittelbar oder unmittelbar am Gehäuse 196 ab (in Fig. 5 nicht explizit gezeigt). Zwischen dem Rückschlagventil 164 und dem Zylinder 130 kann ferner das Regelventil 186 vorgesehen sein, vgl. Fig. 4.

Auch das Schließelement 172 ist durchströmbar gestaltet. Im Schließelement 172 sind Kanäle 244 angeordnet, in die das Druckmittel zumindest in der geöffneten Stellung des Rückschlagventils 164 nach dem Übertritt über den Sitz 170 einströmen kann. Ähnlich wie die Kanäle 226 sind auch die Kanäle 244 sternförmig angeordnet und zu einer Längsachse des Schließelements 172 geneigt. Öffnungsrichtungen/Öffnungswinkel zwischen den Kanälen 226 und der Längsrichtung sowie zwischen den Kanälen 244 und der Längsrichtung sind einander zugewandt.

Es versteht sich, dass das Schließelement 172 auch anderweitig gestaltet sein kann, etwa als geschlossener Körper mit einem konischen Dichtabschnitt, der im geöffneten Zustand beim Sitz 170 einen Ringspalt freigibt. So kann das Schließelement 172 derart gestaltet sein, dass keine Öffnungen ausgebildet sind, die eine Fluidströmung durch das Schließelement 172 hindurch erlauben. Stattdessen kann das Druckmittel im geöffneten Zustand seitlich an einer Mantelfläche des Schließelements 172 entlangströmen. Andere Gestaltungen und auch Mischformen sind denkbar.

An die Kanäle 244 schließt sich die Aufnahme 242 an, die ebenso vom Druckmittel durchströmt werden kann. Da das Schließelement 172 ähnlich wie der Steuerkolben 166 eine Durchgangsöffnung für das Druckmittel bereitstellt, kann das Schließelement 172 etwa im Bereich des Zylinders 238 geführt und zumindest teilweise dichtend am Gehäuse 196, insbesondere am inneren Gehäuseabschnitt 206, aufgenommen sein.

Die Gestaltung des Steuerkolbens 166 hat zur Folge, dass das durchströmende Fluid je nach Strömungsrichtung auch eine Kraftkomponente auf den Steuerkolben 166 erzeugt. Dies begünstigt beispielsweise ein schnelles Schließen des Rückschlagventils 164, wenn ein am Anschluss 156 anliegender Steuerdruck abfällt. Dies hat zur Folge, dass das Druckmittel ausgehend vom Kolbenraum 142 des Zylinders 130, das Regelventil 186 (Fig. 4), das Rückschlagventil 164 und den Steuerkolben 166 in Richtung auf den Anschluss 156 durchströmt. Diese Strömung bewirkt eine Kraftkomponente, die den Steuerkolben 166, insbesondere das Druckstück 216, vom Schließelement 172 des Rückschlagventils 164 abhebt oder zumindest eine entsprechende Vorspannung verringert. Demgemäß wirkt eine Durchströmung weg vom Zylinder 130 ähnlich wie das Vorspannelement 218 auf den Steuerkolben 166.

Die wirksamen Flächen des Steuerkolbens 166, des Schließelements 172 sowie die Eigenschaften der Vorspannelemente 174, 218 sind derart gewählt, dass die Ventilbaugruppe 110 insgesamt auch bei Ansteuerung über lediglich eine einzige Anschlussleitung 116 definiert und sicher in zwei Betriebsmodi betreibbar ist, ohne dass es durch Druckschwankungen, die sich etwa beim Betrieb der Arbeitsmaschine ergeben können, zu unerwünschten Zustandsänderungen kommt.

Der Übergang in den ersten Betriebsmodus kann beispielsweise definiert bei einem Steuerdruck von 50 bar oder mehr in der Steuerdruckleitung 118 bewirkt werden, wenn im Zylinder 130, 132 kein oder nur ein geringer Druck eingesperrt ist. Der Entsperrdruck ist abhängig von dem Druck des Fluids, das im zweiten Betriebsmodus im Zylinder 130, 132 eingesperrt ist, da das Rückschlagventil 164 gegen diesen Druck und gegen die Kraft des Vorspannelements 174, 218 geöffnet werden muss. Jedoch muss selbst dann, wenn im Zylinder 130, 132 kein wesentlicher Druck herrscht, ein beträchtlicher Entsperrdruck aufgebracht werden, um das Rückschlagventil 164 zu öffnen und um die Ventileinheit 146, 148 im ersten Betriebsmodus zu betreiben.

Der Vorspanndruck in der Tankleitung 120 kann beispielsweise etwa 10 bar betragen. Somit wird einerseits die Nachsaugfunktion des jeweils minderbelasteten Zylinders 130, 132 der beiden Zylinders 130, 132 verstärkt. Dies hat ein steiferes Verhalten der Pendelachse 40 zur Folge. Daneben kann gleichwohl noch ein großer Abstand zwischen dem Vorspanndruck und dem zum Öffnen erforderlichen Steuerdruck gewahrt bleiben. Dies erhöht die Sicherheit der Pendelachse 40. Die Wahrscheinlichkeit undefinierter oder gar potentiell gefährlicher Zustände wird weiter verringert.

Insgesamt ergibt sich für die Ventileinheit 146 und die Steuereinheit 134 eine robuste und sichere Bauart.

## Patentansprüche

1. Steuereinheit (134, 136) für einen Zylinder (130, 132) einer Pendelachse (40) einer mobilen Arbeitsmaschine (10, 30), wobei die Steuereinheit (134, 136) Folgendes aufweist:
- einen einzigen eingangsseitigen Anschluss (156) für eine Fluidleitung (116) für ein Druckmittel,
- einen ausgangsseitigen Anschluss (158) für den Zylinder (130, 132), und
- eine Ventileinheit (146, 148) mit einem Steuerkolben (166),
wobei der Steuerkolben (166) über zumindest eine Durchgangsöffnung (222) durchströmbar ist, und
wobei das Druckmittel bei der Strömung zwischen dem eingangsseitigen Anschluss (156) und dem ausgangsseitigem Anschluss (158) den Steuerkolben (166) durchströmt, wobei die Ventileinheit (146, 148) ferner ein Rückschlagventil (164) aufweist, wobei der Steuerkolben (166) in einem belasteten Zustand einer Schließrichtung des Rückschlagventils (164) entgegenwirkt, wobei der Steuerkolben (166) durch ein Vorspannelement (174, 218) vorgespannt ist, das gleichgerichtet mit der Schließrichtung des Rückschlagventils (164) auf den Steuerkolben (166) einwirkt, wobei in einem ersten Betriebsmodus das Rückschlagventil (164) geöffnet ist, wobei in einem zweiten Betriebsmodus das Rückschlagventil (164) geschlossen ist, und wobei der ausgangsseitige Anschluss (158) ein einziger ausgangsseitiger Anschluss (158) ist.

2. Steuereinheit (134, 136) nach Anspruch 1, wobei die zumindest eine Durchgangsöffnung (222) im Steuerkolben (166) derart gestaltet ist, dass sich bei der Durchleitung eines Druckmittels eine Kraft auf den Steuerkolben (166) ergibt, die richtungsgleich einer Strömungsrichtung des Druckmittels ist.

3. Steuereinheit (134, 136) nach Anspruch 1 oder 2, wobei das Vorspannelement (174, 218) in einem entlüftbaren Aufnahmeabschnitt (176) aufgenommen ist, wobei der Aufnahmeabschnitt (176) vorzugsweise über ein Rückschlagventil (180) mit der Atmosphäre verbunden ist, das bei Überdruck im Aufnahmeabschnitt (176) öffnet.

4. Steuereinheit (134, 136) nach einem der vorhergehenden Ansprüche, wobei der Steuerkolben (166) in einem Gehäuse (196) der Steuereinheit (134, 136) dichtend aufgenommen ist, wobei das Vorspannelement (174, 218) außerhalb eines abgedichteten Bereichs des Steuerkolbens (166) mit diesem gekoppelt ist.

5. Steuereinheit (134, 136) nach einem der vorhergehenden Ansprüche, wobei die Fluidleitung (116) als kombinierte Steuerleitung und Versorgungsleitung dient, und wobei der einzige Anschluss (156) als Versorgungsanschluss für eine einzige Fluidleitung (116) ausgebildet ist, über die die Steuereinheit (134, 136) mit einem Betriebsarten-Steuerventil (106) und einer weiteren Steuereinheit (134, 136) verbindbar ist.

6. Zylinderbaugruppe (110, 112) für eine Pendelachse (40) einer mobilen Arbeitsmaschine (10, 30), mit einem Zylinder (130, 132) und einer Steuereinheit (134, 136) nach einem der vorhergehenden Ansprüche.

7. Zylinderbaugruppe (110, 112) nach Anspruch 6, wobei zwischen der Ventileinheit (146, 148) und dem Zylinder (130, 132) ein Regelventil (186) vorgesehen ist.

8. Zylinderbaugruppe (110, 112) nach Anspruch 7, wobei das Regelventil (186) als Stromregelventil und insbesondere als Drosselrückschlagventil ausgebildet ist.

9. Zylinderbaugruppe (110, 112) nach Anspruch 7 oder 8, wobei das Regelventil (186) einen richtungsabhängen Volumenstrom zwischen der Ventileinheit (146, 148) und dem Zylinder (130, 132) bewirkt, und wobei in Richtung auf die Ventileinheit (146, 148) ein niedrigerer Volumenstrom als in Richtung auf den Zylinder (130, 132) gegeben ist.

10. Zylinderbaugruppe (110, 112) nach einem der Ansprüche 7 bis 9, wobei das Regelventil (186) in Richtung auf den Anschluss (156) einen geringeren Volumenstrom als das geöffnete Rückschlagventil (164) erlaubt.

11. Vorrichtung zur Ansteuerung einer Pendelachse (40) einer mobilen Arbeitsmaschine (10, 30), umfassend zwei Zylinderbaugruppen (110, 112) nach einem der Ansprüche 6 bis 10, wobei die Zylinderbaugruppen (110, 112) über die Fluidleitung (116) miteinander verbunden sind, und wobei die Fluidleitung (116) ferner mit einem Betriebsarten-Steuerventil (106) verbunden ist.

12. Vorrichtung nach Anspruch 11, wobei das Steuerventil (106) in einer ersten Schaltstellung, die dem ersten Betriebsmodus entspricht, die Fluidleitung (116) mit einer Steuerdruckleitung (118) verbindet, und in einer zweiten Schaltstellung, die dem zweiten Betriebsmodus entspricht, die Fluidleitung (116) mit einer Tankleitung (120) verbindet, wobei in der Tankleitung (120) ein Vorspanndruck anliegt, und wobei in der Steuerdruckleitung (118) ein Steuerdruck anliegt.

13. Vorrichtung nach Anspruch 12, wobei der Vorspanndruck in der Tankleitung (120) kleiner als ein Steuerdruck in der Steuerdruckleitung (118) ist.

14. Vorrichtung nach Anspruch 12 oder 13, wobei im ersten Betriebsmodus die Rückschlagventile (164) der Steuereinheiten (134, 136) beider Zylinderbaugruppen (110, 112) durch den Steuerdruck der Steuerdruckleitung (118) geöffnet sind.

15. Vorrichtung nach einem der Ansprüche 12 bis 14, wobei im zweiten Betriebsmodus das Rückschlagventil (164) der Ventileinheit (146, 148) einer höherbelasteten Zylinderbaugruppe (110, 112) durch den im Zylinder (130, 132) dieser Zylinderbaugruppe (110, 112) herrschenden Druck geschlossen ist, und wobei eine minderbelastete Zylinderbaugruppe (110, 112) durch den Vorspanndruck der Tankleitung (120) vorgespannt ist.

## Claims

1. A control unit (134, 136) for a cylinder (130, 132) of a swing axle (40) of a mobile working machine (10, 30), the control unit (134, 136) comprising the following:
- a single inlet port (156) for a fluid line (116) for a pressure medium,
- an outlet port (158) for the cylinder (130, 132), and
- a valve unit (146, 148) comprising a control piston (166),
wherein a flow through the control piston (166) is possible through at least one passage opening (222), and
wherein the pressure medium flows through the control piston (166) in the event of a flow between the inlet port (156) and the outlet port (158),
wherein the valve unit (146, 148) further comprises a check valve (164),
wherein the control piston (166) counteracts, in a loaded state, a closing direction of the check valve (164),
wherein the control piston (166) is biased by a biasing element (174, 218), which acts on the control piston (166) in the same direction as the closing direction of the check valve (164),
wherein in a first operating mode the check valve (164) is open,
wherein in a second operating mode the check valve (164) is closed, and wherein the outlet port (158) is a single outlet port (158).

2. The control unit (134, 136) according to claim 1, wherein the at least one passage opening (222) in the control piston (166) is formed such that, when a pressure medium passes therethrough, a force onto the control piston (166) is produced that is equal in direction to a flow direction of the pressure medium.

3. The control unit (134, 136) according to claim 1 or 2, wherein the biasing element (174, 218) is accommodated in a ventable receiving portion (176), wherein the receiving portion (176) is preferably connected to the atmosphere via a check valve (180) which opens in the event of overpressure in the receiving portion (176).

4. The control unit (134, 136) according to any one of the preceding claims, wherein the control piston (166) is sealingly accommodated in a housing (196) of the control unit (134, 136), wherein the biasing member (174, 218) is coupled to the control piston (166) outside a sealed region thereof.

5. The control unit (134, 136) according to any one of the preceding claims, wherein the fluid line (116) serves as a combined control line and supply line, and wherein the single port (156) is formed as a supply port for a single fluid line (116) via which the control unit (134, 136) is connectable to an operating mode control valve (106) and a further control unit (134, 136).

6. A cylinder assembly (110, 112) for a swing axle (40) of a mobile working machine (10, 30), comprising a cylinder (130, 132) and a control unit (134, 136) according to any one of the preceding claims.

7. The cylinder assembly (110, 112) according claim 6, wherein a regulating valve (186) is provided between the valve unit (146, 148) and the cylinder (130, 132).

8. The cylinder assembly (110, 112) according to claim 7, wherein the regulating valve (186) is arranged as a flow regulating valve and in particular as a one-way restrictor valve.

9. The cylinder assembly (110, 112) according to claim 7 or 8, wherein the regulating valve (186) causes a direction-dependent volume flow between the valve unit (146, 148) and the cylinder (130, 132), and wherein a lower volume flow is provided in the direction towards the valve unit (146, 148) than in the direction towards the cylinder (130, 132).

10. The cylinder assembly (110, 112) according to any one of claims 7 to 9, wherein the regulating valve (186) allows a lower volume flow rate in the direction towards the port (156) than the open check valve (164).

11. A device for controlling a swing axle (40) of a mobile working machine (10, 30), comprising two cylinder assemblies (110, 112) according to any one of claims 6 to 10, wherein the cylinder assemblies (110, 112) are connected to each other via the fluid line (116), and wherein the fluid line (116) is further connected to an operating mode control valve (106).

12. The device according to claim 11, wherein the control valve (106) connects the fluid line (116) to a control pressure line (118) in a first switching position that corresponds to the first operating mode, and connects the fluid line (116) to a tank line (120) in a second switching position that corresponds to the second operating mode, wherein a preload pressure is present at the tank line (120), and wherein a control pressure is present at the control pressure line (118).

13. The device according to claim 12, wherein the preload pressure in the tank line (120) is less than a control pressure in the pilot pressure line (118).

14. The device according to claim 12 or 13, wherein in the first operating mode the check valves (164) of the control units (134, 136) of both cylinder assemblies (110, 112) are opened by the control pressure of the control pressure line (118).

15. The device according to any one of claims 12 to 14, wherein in the second operating mode the check valve (164) of the valve unit (146, 148) of a higher loaded cylinder assembly (110, 112) is closed by the pressure that is present in the cylinder (130, 132) of this cylinder assembly (110, 112), and wherein a lower loaded cylinder assembly (110, 112) is biased by the preload pressure of the tank line (120).

## Revendications

1. Unité de commande (134, 136) destinée à un cylindre (130, 132) d'un essieu oscillant (40) d'une machine de travail mobile (10, 30), l'unité de commande (134, 136) comprenant :
- un seul raccord côté entrée (156) destiné à une conduite de fluide (116) destinée à un agent sous pression,
- un raccord côté sortie (158) destiné au cylindre (130, 132) et
- une unité de soupape (146, 148) comportant un piston de commande (166),
le piston de commande (166) pouvant être traversé par au moins un orifice traversant (222), et
l'agent sous pression s'écoulant à travers le piston de commande (166) pendant l'écoulement entre le raccord côté entrée (156) et le raccord côté sortie (158), l'unité de soupape (146, 148) comprenant en outre un clapet anti-retour (164),
le piston de commande (166) agissant dans un état contraint dans un sens opposé à un sens de fermeture du clapet anti-retour (164),
le piston de commande (166) étant précontraint par un élément de précontrainte (174, 218) qui agit sur le piston de commande (166) dans le même sens que le sens de fermeture du clapet anti-retour (164),
le clapet anti-retour (164) étant ouvert dans un premier mode de fonctionnement, le clapet anti-retour (164) étant fermé dans un deuxième mode de fonctionnement, et
le raccord côté sortie (158) étant un raccord côté sortie (158) unique.

2. Unité de commande (134, 136) selon la revendication 1, l'au moins un orifice traversant (222) étant ménagé dans le piston de commande (166) de telle sorte que, lors du passage d'agent sous pression, une force soit exercée sur le piston de commande (166), laquelle est de même sens qu'un sens d'écoulement de l'agent sous pression.

3. Unité de commande (134, 136) selon la revendication 1 ou 2, l'élément de précontrainte (174, 218) étant reçu dans une portion de réception (176) pouvant être purgé, la portion de réception (176) étant de préférence reliée à l'atmosphère par le biais d'un clapet anti-retour (180) qui, en cas de surpression, s'ouvre dans la portion de réception (176).

4. Unité de commande (134, 136) selon l'une des revendications précédentes, le piston de commande (166) étant reçu de manière étanche dans un boîtier (196) de l'unité de commande (134, 136), l'élément de précontrainte (174, 218) étant accouplé au piston de commande (166) à l'extérieur d'une région étanche de celui-ci.

5. Unité de commande (134, 136) selon l'une des revendications précédentes, la conduite de fluide (116) servant de conduite de commande et de conduite d'alimentation combinées, et le raccord unique (156) étant conçu comme un raccord d'alimentation destiné à une conduite de fluide unique (116) par le biais de laquelle l'unité de commande (134, 136) peut être raccordée à une soupape de commande de mode de fonctionnement (106) et à une autre unité de commande (134, 136).

6. Ensemble formant cylindre (110, 112) destinée à un essieu oscillant (40) d'une machine de travail mobile (10, 30) et comprenant un cylindre (130, 132) et une unité de commande (134, 136) selon l'une des revendications précédentes.

7. Ensemble formant cylindre (110, 112) selon la revendication 6, une soupape de régulation (186) étant prévue entre l'unité de soupape (146, 148) et le cylindre (130, 132).

8. Ensemble formant cylindre (110, 112) selon la revendication 7, la soupape de régulation (186) étant conçue comme une soupape de régulation de débit et en particulier comme une soupape de retenue à étranglement.

9. Ensemble formant cylindre (110, 112) selon la revendication 7 ou 8, la soupape de régulation (186) générant un débit volumique dépendant de la direction entre l'unité de soupape (146, 148) et le cylindre (130, 132), et un débit volumique étant plus faible en direction de l'unité de soupape (146, 148) qu'en direction du cylindre (130, 132).

10. Ensemble cylindre (110, 112) selon l'une des revendications 7 à 9, la soupape de régulation (186) permettant en direction du raccord (156) un débit volumique plus faible que celui du clapet anti-retour ouvert (164).

11. Dispositif de commande d'un essieu oscillant (40) d'une machine de travail mobile (10, 30), ledit dispositif comprenant deux ensembles formant cylindres (110, 112) selon l'une des revendications 6 à 10, les ensembles formant cylindres (110, 112) étant reliés entre eux par le biais de la conduite de fluide (116), et la conduite de fluide (116) étant en outre reliée à une soupape de commande de mode de fonctionnement (106).

12. Dispositif selon la revendication 11, la soupape de commande (106) reliant la conduite de fluide (116) à une conduite de pression de commande (118) dans une première position de commutation qui correspond au premier mode de fonctionnement, et reliant la conduite de fluide (116) à une conduite de réservoir dans une deuxième position de commutation qui correspond au deuxième mode de fonctionnement (120), une pression de précontrainte étant présente dans la conduite de réservoir (120), et une pression de commande étant présente dans la conduite de pression de commande (118).

13. Dispositif selon la revendication 12, la pression de précontrainte dans la conduite de réservoir (120) étant inférieure à une pression de commande dans la conduite de pression de commande (118).

14. Dispositif selon la revendication 12 ou 13, les clapets anti-retour (164) des unités de commande (134, 136) des deux ensembles formant cylindres (110, 112) étant ouverts, dans le premier mode de fonctionnement, par la pression de commande de la conduite de pression de commande (118).

15. Dispositif selon l'une des revendications 12 à 14, le clapet anti-retour (164) de l'unité de soupape (146, 148) d'un ensemble formant cylindre (110, 112) plus fortement contraint étant fermé, dans le deuxième mode de fonctionnement, par la pression régnant dans le cylindre (130, 132) de cet ensemble formant cylindre (110, 112), et un ensemble formant cylindre (110, 112) moins fortement contraint étant précontraint par la pression de précontrainte de la conduite de réservoir (120).
